# EUROPÄISCHE PATENTSCHRIFT

(11) **EP 1 264 518 B1**
(45) Veröffentlichungstag und Bekanntmachung des Hinweises auf die Patenterteilung: **26.07.2006**
(21) Anmeldenummer: 01923654.6
(22) Anmeldetag: 08.03.2001
(51) Int. Cl.: H05B 33/00

(54) **ANSTEUERUNG VON LEUCHTDIODEN (LED's)**
CONTROL OF LIGHT-EMITTING DIODES (LEDS)
COMMANDE DE DIODES ELECTROLUMINESCENTES (LED)

(30) Priorität: 17.03.2000 DE 10013207
(43) Veröffentlichungstag der Anmeldung: 11.12.2002
(73) Patentinhaber: TridonicAtco GmbH & Co. KG, 6851 Dornbirn (AT)
(72) Erfinder: BÖCKLE, Reinhard, A-6841 Mäder (AT); HEIN, Peter, A-6833 Fraxern (AT)
(74) Vertreter: Rupp, Christian
(86) Internationale Anmeldenummer: PCT/EP2001/002640
(87) Internationale Veröffentlichungsnummer: WO 2001/069978

(56) Entgegenhaltungen:
- EP-A- 0 567 280
- US-A- 5 661 645
- PATENT ABSTRACTS OF JAPAN vol. 014, no. 016 (E-872), 12. Januar 1990 (1990-01-12) & JP 01 259754 A (CANON INC), 17. Oktober 1989 (1989-10-17)
- WILEY , XP047158408 * Seite 253 *
- CRC PRESS , XP084938345

## Beschreibung

Die vorliegende Erfindung betrifft eine Schaltungsanordnung zur Spannungsversorgung und Steuerung des Betriebsverhaltens von Leuchtdioden zu Beleuchtungszwecken bzw. ein Verfahren hierfür.

Die Verwendung von Leuchtdioden in Anzeigevorrichtungen ist bereits seit langem bekannt, wobei die ersten Leuchtdioden allerdings lediglich eine geringe Lichtleistung aufwiesen und ihre Anwendung somit auf diesen Bereich beschränkt war. Erst seit einiger Zeit können Leuchtdioden mit einer nunmehr ausreichenden Leuchtstärke hergestellt werden, die einen Einsatz zu Beleuchtungszwecken rechtfertigt. In der Regel werden dabei eine Vielzahl von Leuchtdioden in einer Matrixanordnung (Array) zusammengefaßt, um einen Strahler zu bilden, wie dies beispielsweise in dem US-Patent US 6,016,038 beschrieben ist.

Die Ansteuerung der Leuchtdioden erfolgt dabei üblicher Weise durch eine Konstantstromquelle, bei der der durch die Diode bzw. Dioden fließenden Strom erfaßt und auf einen vorgegebenen Sollwert geregelt wird. Dieser Sollwert wird vorzugsweise derart gewählt, daß die Leuchtdioden in einem möglichst hohen Wirkungsgrad betrieben werden. Eine derartige Konstantstromquelle weist einen Bipolartransistor auf, dessen Kollektor mit der Leuchtdiode verbunden ist. Der Emitter des Transistors ist mittels eines ohm'schen Widerstands mit Masse verbunden und zur Regelung des Stroms zum Steueranschluß (Basis) des Transistors zurückgekoppelt. Über den ohm'schen Widerstand wird der Diodenstrom erfaßt und mittels einer Änderung der Basisspannung des Transistors auf den gewünschten Wert geregelt.

Dabei besteht die Möglichkeit, die Leuchtdiode durch eine Impulsbreitenmodulation des an den Basisanschluß des Transistors gelegten Signals zu dimmen. Der Vorteil dieses Verfahrens besteht darin, daß hierdurch die Leuchtdiode entweder voll oder gar nicht angesteuert wird, wodurch der Wirkungsgrad der gesamten Schaltung erhöht wird. Die Frequenz des PWM-Signals ist dabei derart hoch, daß für das menschliche Auge kein Flackern wahrnehmbar ist.

Da zur Verwendung für Beleuchtungszwecke die Leuchtdioden und die zugehörigen Ansteuerschaltungen (insbesondere die Konstantstromquelle(n)) sehr dicht gepackt werden müssen, um eine ausreichende Leuchtkraft zu erzielen, besteht üblicher Weise bei derartigen Anordnungen das Problem einer hohen Wärmeentwicklung. Insbesondere der Bipolartransistor ist einer hohen thermischen Belastung ausgesetzt, was zum einen den Wirkungsgrad der gesamten Schaltung reduziert und zum anderen erfordert, daß bestimmte Vorkehrungen getroffen werden, um einen Ausfall der Schaltung aufgrund einer überhöhten Wärmeentwicklung vermeiden. Der zur Erfassung des durch die Leuchtdioden fließenden Stroms verwendete Meßwiderstand produziert darüber hinaus Verlustleistung.

Aus der europäischen Patentanmeldung EP 0 567 280 A2 ist eine Schaltungsanordnung zum quasi resonanten Betreiben einer Diode bekannt, wobei diese Diode als Pumpenergiequelle in einem Festkörperlaser Verwendung finden soll. Die Diode ist dabei innerhalb eines Lastkreises angeordnet, der über einen sog. Sperrwandler betrieben wird und an dem Ausgang eines einzigen steuerbaren Schalters angeschlossen ist. Durch entsprechendes Takten des Schalters wird der der Leuchtdiode zugeführte Strom geregelt.

Es ist daher Aufgabe der vorliegenden Erfindung, eine Schaltungsanordnung zur Spannungsversorgung und zur Steuerung des Betriebsverhaltens von Leuchtdioden zu Beleuchtungszwecken anzugeben, bei dem die oben erwähnten Probleme vermieden werden und eine Helligkeitssteuerung ermöglicht wird.

Die Aufgabe wird durch eine Schaltungsanordnung, welche die Merkmale des Anspruchs 1 aufweist, bzw. durch ein Verfahren gemäß dem Anspruch 19 gelöst. Erfindungsgemäß ist die mindestens eine Leuchtdiode innerhalb eines ein Resonanzglied aufweisenden Lastkreises angeordnet, der an den Ausgang eines in seiner Ausgangsfrequenz variierbaren Wechselrichters angeschlossen ist, der wiederum eingangsseitig mit einer Gleichspannungsquelle verbunden ist. Dabei weist der Wechselrichter mindestens zwei steuerbare Leistungsschalter auf, deren Schaltfrequenz veränderbar ist, wobei zum Steuern der Helligkeit der wenigstens einen Leuchtdiode die Schaltfrequenz der Leistungsschalter ausgehend von der Resonanzfrequenz des Lastkreises verändert wird.

Das Verändern dieser Schaltfrequenz hat zur Folge, daß aufgrund des in dem Lastkreis angeordneten Resonanzglieds der durch die Leuchtdiode fließende Strom und damit die Helligkeit der Diode verändert wird. Dies entspricht im wesentlichen dem bekannten Verfahren zum Ansteuern und Betreiben von Gasentladungslampen mittels elektronischer Vorschaltgeräte. Dadurch ergibt sich unmittelbar die Möglichkeit, die Topologie bekannter EVG's zu nutzen, incl. bereits bekannter und verwendeter Beleuchtungssysteme, die eine zentrale Steuerung einer Vielzahl verteilt angeordneter Leuchtmittel ermöglichen.

Ein weiterer Vorteil ergibt sich dadurch, daß bei einer geeigneten Anpassung des Lastkreises die von der Gleichspannungsquelle abgegebene Versorgungsgleichspannung aus einem weiten Bereich gewählt werden kann. Dabei sind als Gleichspannungsquelle alle hierfür geeigneten bekannten Schaltungen denkbar, beispielsweise AC/DC-Wandler, DC/DC-Wandler, Hoch- oder Tiefsetzsteller. Durch die Ausnutzung der Resonanz des Lastkreises besteht ferner auch die Möglichkeit, mit kleinen Versorgungsspannungen zu arbeiten und dennoch Serienschaltungen mehrerer Leuchtdioden zu betreiben, deren Gesamtflußspannung über der Versorgungsspannung liegt. Bei entsprechend hoher Versorgungsspannung können dementsprechend sehr viele Leuchtdioden in Serie geschaltet werden.

Ein weiterer Vorteil der erfindungsgemäßen Schaltungsanordnung gegenüber den bisher eingesetzten Konstantstromquellen besteht darin, daß bei der Wahl geeigneter Leistungsschalter nur sehr geringe Schalt- und Durchlaßverluste in dem Wechselrichter auftreten, so daß insgesamt ein höherer Wirkungsgrad erzielt wird. Beispielsweise können als Leistungsschalter Feldeffekttransistoren verwendet werden, wobei sich als weiterer Vorteil ergibt, daß im Vergleich zu dem Bipolartransistor einer Konstantstromquelle bei den Feldeffekttransistoren der Schaltungsanordnung der vorliegenden Erfindung nur eine geringe Wärmeentwicklung zu befürchten ist. Die Leistungsschalter des Wechselrichters können beispielsweise in Form einer Halbbrückenschaltung oder einer Vollbrückenschaltung angeordnet sein.

Weiterbildungen der Erfindung sind Gegenstand der Unteransprüche. Um beispielsweise beide Halbwellen der von dem Wechselrichter erzeugten Wechselspannung auszunützen, ist es vorteilhaft, in dem Lastkreis mehrere Leuchtdioden bzw. Leuchtdioden-Arrays antiparallel zu schalten, so daß diese in einem Pulsbetrieb mit jeweils maximal 50% Einschaltdauer betrieben werden. Eine andere Möglichkeit kann darin bestehen, den Leuchtdioden bzw. den Arrays unmittelbar einem Gleichrichter vorzuschalten, wodurch sich 100% Einschaltdauer ergeben. In diesem Fall ist werden die Leuchtdioden parallel geschaltet.

Eine andere Weiterentwicklung der erfindungsgemäßen Schaltungsanordnung besteht darin, daß Mittel vorgesehen sind um den durch die Leuchtdiode bzw. Leuchtdioden fließenden Strom zu erfassen. Dadurch ergibt sich die Möglichkeit, die Schaltfrequenz der Leistungsschalter in Abhängigkeit von dem erfaßten Strom zu regeln und damit die gesamte Schaltungsanordnung an eine unterschiedliche Zahl von in Serie geschalteten Leuchtdioden anzupassen, ohne dabei die Verlustleistung zu erhöhen. Eine andere Möglichkeit besteht darin, die von der Gleichspannungsquelle abgegebene Versorgungsgleichspannung in Abhängigkeit von dem erfaßten Strom zu regeln. Ferner kann vorgesehen sein, die Intensität des von den Leuchtdioden abgegebenen Lichts zu erfassen und damit die Schaltfrequenz der Leistungsschalter auf einen Wert einzustellen, der einer gewünschten Leuchtstärke der gesamten Anordnung entspricht.

Ferner wäre es auch denkbar, Leuchtdioden unterschiedlicher Farbe zu verwenden, um durch eine geeignete Steuerung der Intensität der verschiedenen Farben insgesamt eine gewünschte Mischfarbe einzustellen. In diesem Fall ist für die Leuchtdioden jeweils einer Farbe ein Wechselrichter vorgesehen, so daß die Intensität der verschiedenen Farben unabhängig voneinander gesteuert werden kann.

Eine vorteilhafte Weiterbildung der Erfindung betrifft Maßnahmen, durch welche die Schaltungsanordnung in ihren Abmessungen möglichst kompakt gehalten werden kann. Um dies zu erreichen, besteht die Schaltungsanordnung zumindest teilweise aus einer Mehrlagenschaltung, in die passive Bauelemente - z.B. Kapazitäten, Induktivitäten und dergleichen - integriert sind. Diese Integration ist insbesondere dann möglich, wenn die Leistungsschalter mit hohen Frequenzen betrieben werden, da dann in der Schaltung entsprechend niedrigere Kapazitäts- bzw. Induktivitätswerte verwendet werden können. Im vorliegenden Fall hat sich ein Frequenzbereich von 200 kHz bis 1 MHz als besonders geeignet herausgestellt. Eine durch die Frequenzerhöhung zunächst bedingte erhöhte Abstrahlung von elektromagnetischen Hochfrequenz-Feldern kann durch geeignete Abschirmmaßnahmen vermieden werden, die - aufgrund der reduzierten Abmessungen der Schaltung - einfach vorgenommen werden können.

Die Integrierung von Bauelementen kann beispielsweise durch eine mehrlagige Leiterplatten-Technik erfolgen. Vorzugsweise wird die Mehrlagenschaltung durch eine LTCC- (Low Temperature Cofired Ceramic) Struktur realisiert, welche aus mehreren übereinander angeordneten niedrig-sinternden Keramikschichten oder -folien besteht, zwischen denen sich Leiterbahnen befinden. Gegenüber der herkömmlichen Leiterplattentechnik kann mit dieser in den letzten Jahren neu entwickelten und beispielsweise aus der EP 0 581 206 A2 bekannten LTCC-Technik eine nochmalige Miniaturisierung der Schaltung erreicht werden. Dabei können neben den Leiterbahnen insbesondere auch Induktivitäten und Kapazitäten in die Mehrlagenschaltung integriert werden. Ferner bietet das Keramik-Material den Vorteil, daß es Wärme relativ gut leitet, was bedeutet, daß bei gleichem Bauvolumen größere Leistungen erzielt werden können, da Verlustwärme besser abgestrahlt wird. Vorzugsweise wird die Wärmeableitung durch Einbetten der Keramikstruktur in ein metallisches Gehäuse nochmals erhöht. Auf diese Weise kann auch eine effektive Abschirmung der von der Schaltungsanordnung in die Umgebung abgestrahlten Hochfrequenz-Felder erzielt werden.

Bei den oben genannten Frequenzen kann ein Großteil der Bauelemente der Schaltungsanordnung in die Mehrlagenschaltung integriert werden. Die verbleibenden passiven Bauelemente sowie Halbleiter-Baugruppen sind allerdings nach wie vor an der Oberfläche bzw. außerhalb der Keramikstruktur anzubringen. Um auch hierfür einen möglichst geringen Platzbedarf zu erzielen, werden die Halbleiter-Baugruppen vorzugsweise mittels der bekannten Flip-Chip- (FC) Technik auf dem Keramiksubstrat montiert. Dabei wird zwischen dem gehäuselos montierten Halbleiter sowie den Kontakten auf der Oberfläche des Trägersubstrats eine Kunststoffschicht eingebracht, die zum einen senkrecht zur Kontaktierungsebene elektrisch leitfähig und in der Kontaktierungsebene isolierend wirkt und die zum anderen die sich bei einer unterschiedlichen thermischen Ausdehnung der Halbleiterbaugruppe und des Keramiksubstrats ergebenden Spannungen aufnimmt und somit eine Zerstörung der Halbleiterbaugruppe verhindert.

Im folgenden soll die Erfindung anhand der beiliegenden Zeichnung. näher erläutert werden. Es zeigen:
Fig. 1 ein erstes Ausführungsbeispiel einer Schaltungsanordnung zum Ansteuern zweier antiparallel geschalteter Leuchtdioden-Arrays;
Fig. 2 ein zweites Ausführungsbeispiel einer erfindungsgemäßen Schaltungsanordnung;
Fig. 3a-8 die Fertigungsschritte einer Mehrlagen-Keramik- (LTCC) Struktur; und
Fig. 9 einen vergrößerten Ausschnitt einer LTCC-Struktur.

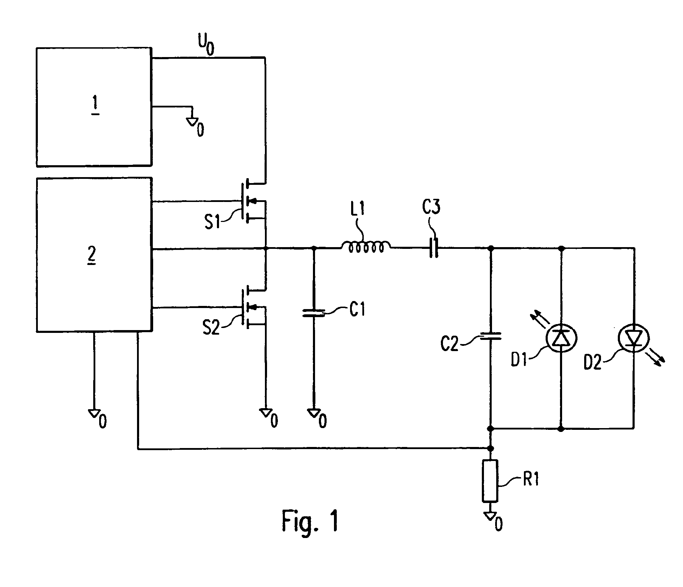

Die in Fig. 1 dargestellte Schaltungsanordnung ist bereits im wesentlichen durch die Schaltungen elektronischer Vorschaltgeräte zum Betreiben von Gasentladungslampen bekannt. An den Eingang des Wechselrichters, der durch zwei in einer Halbbrückenschaltung angeordnete Feldeffekttransistoren S1 und S2 gebildet wird, ist eine Gleichspannungsquelle 1 angeschlossen, welche eine Versorgungsgleichspannung U₀ abgibt. Das Ansteuern der beiden Feldeffekttransitoren S1 und S2 erfolgt durch eine Steuerschaltung 2. An den Ausgang der Halbbrücke ist der Lastkreis angeschlossen, der zwei antiparallel geschaltete Leuchtdioden(LED)-Arrays D1 und D2 aufweist.

Im vorliegenden Beispiel wird der Lastkreis durch ein aus einer Drossel L1 und einem Kondensator C3 bestehendes LC-Glied, einem zu dem zweiten Feldeffekttransistor S2 parallel liegenden Kondensator C1 sowie einen parallel zu den Leuchtdioden-Arrays liegenden weiteren Kondensator C2 gebildet. Die in Fig. 1 dargestellte Struktur des Lastkreises ist allerdings lediglich eine mögliche Variante. Beispielsweise wäre auch die Verwendung eines RLC-Gliedes, eines RL-Gliedes, eines RC-Gliedes oder einer sonstigen Schaltung, die ein geeignetes Resonanzverhalten aufweist, denkbar. Schließlich besteht auch die Möglichkeit, die beiden Dioden-Arrays D1 und D2 direkt an den Ausgang der Halbbrücke anzuschließen, wobei die Steuerung des Stromes über die Leuchtdioden dann durch eine Veränderung der von der Gleichspannungsquelle 1 abgegebenen Versorgungsgleichsspannung U₀ erfolgt.

Bei der Gleichspannungsquelle 1 kann es sich beispielsweise um einen an die Netzversorgung angeschlossenen AC/DC-Wandler, einen DC/DC-Wandler, einen Hoch- oder Tiefsetzsteller handeln. Die von der Gleichspannungsquelle 1 erzeugte Versorgungsgleichspannung U₀ kann fest vorgegeben sein, vorzugsweise ist die Gleichspannungsquelle 1 allerdings regelbar ausgeführt, da durch eine Veränderung von U₀ eine Anpassung an eine unterschiedliche Anzahl von Leuchtdioden ermöglicht wird.

Die Steuerung der Helligkeit der Leuchtdioden-Arrays D1 bzw. D2 erfolgt durch eine Veränderung der Schaltfrequenz der beiden Feldeffekttransistoren S1 und S2. Um eine möglichst hohe Leuchtkraft zu erzielen, wird dabei die Schaltfrequenz an die Resonanzfrequenz des Lastkreises angenähert, während zum Dimmen eine entsprechend höhere oder niedrigere Frequenz gewählt wird. Die Dimensionierung der Parameter der einzelnen Elemente des Lastkreises ist derart, daß das Schalten der beiden Feldeffekttransitoren S1 und S2 grundsätzlich mit einer derart hohen Frequenz erfolgt, daß für das menschliche Auge kein Flackern der Leuchtdioden D1 bzw. D2 wahrnehmbar ist. Sollen passive Bauelemente der Schaltung in eine Mehrlagenschaltung integriert werden, erfolgt das Schalten der Feldeffekttransitoren S1 und S2 vorzugsweise sogar mit einer Frequenz im Bereich zwischen 200 kHz mit 1 MHz.

Wie beim Betrachten der Schaltung unmittelbar einsichtig ist, werden die Leuchtdioden der beiden Arrays D1 und D2 den Halbwellen der von dem Wechselrichter erzeugten Wechselspannung folgend ein- und ausgeschaltet, so daß sich ein gepulster Betrieb mit 50% Einschaltdauer ergibt. Die Steuerung der Helligkeit erfolgt allerdings im Gegensatz zu dem bekannten PWM-Verfahren nicht durch eine Veränderung des Verhältnisses zwischen Einschalt- und Ausschaltzeit, sondern durch eine Steuerung des durch die Leuchtdioden fließenden Stromes.

Durch die während des Betriebes der Leuchtdioden entstehende und nicht zu vermeidende Wärmeentwicklung kann sich der Innenwiderstand bzw. der Flußwiderstand der Dioden mit der Zeit verändern. Um derartige Effekte zu berücksichtigen, ist in der in Fig. 1 dargestellten Schaltungsanordnung ein Meßwiderstand R1 in Serie zu den Leuchtdioden-Arrays D1 und D2 geschaltet, wobei die über diesen Widerstand R1 abfallende Spannung von der Steuerschaltung 2 zum Beurteilen des durch die Arrays D1 und D2 fließenden Stroms erfaßt wird. Durch eine Veränderung der Schaltfrequenz der beiden Feldeffekttransistoren S 1 und S2 können dann die zuvor beschriebenen Temperatur-Effekte ausgeglichen werden. Ferner besteht die Möglichkeit, die gesamte Schaltung an eine unterschiedliche Anzahl von in Serie geschalteten Leuchtdioden anzupassen, ohne dabei die Verlustleistung zu erhöhen.

Zum Erfassen des durch die Leuchtdioden fließenden Stromes können anstelle des Meßwiderstandes R1 auch andere Mittel vorgesehen sein. Beispielsweise kann der über die Halbbrücke fließende Strom durch einen im unteren Zweig der Halbbrücke angeordneten Widerstand erfaßt werden. Anstelle der Anpassung des Geräts an unterschiedliche Leuchtdiodenzahlen durch eine Veränderung der Schaltfrequenz kann - wie zuvor erwähnt - auch eine Veränderung der Versorgungsgleichspannung U₀ vorgesehen sein. Alternativ zu der dargestellten Halbbrückenanordnung kann der Lastkreis mit den Leuchtdioden-Arrays D1 und D2 auch in einer Vollbrückenschaltung angeordnet sein.

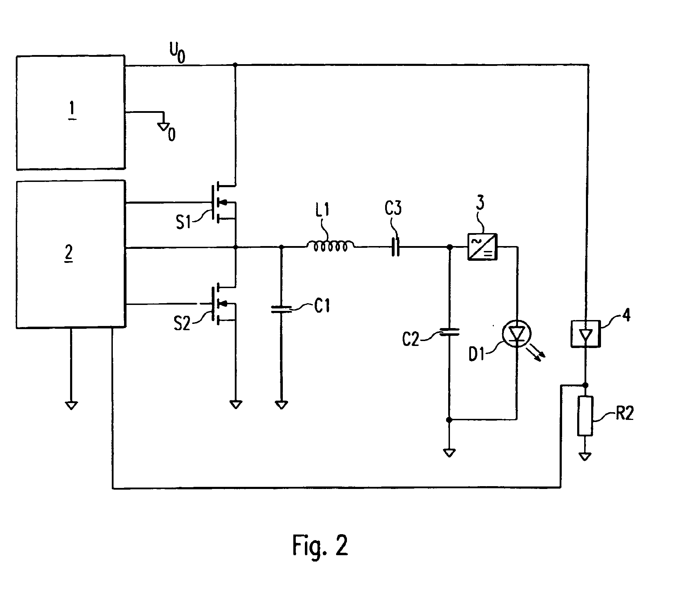

Fig. 2 zeigt eine weitere mögliche Schaltungsanordnung, wobei nun allerdings lediglich ein Leuchtdioden-Array D1 in dem Lastkreis vorgesehen ist. Um zu erreichen, daß die Leuchtdioden in beiden Halbwellen der von dem Wechselrichter erzeugten Wechselspannung eingeschaltet sind, ist dem Array D 1 ein Gleichrichter 3 vorgeschaltet. Ferner ist ein Photosensor 4 vorgesehen, mit dessen Hilfe die Leuchtstärke der Leuchtdioden erfaßt wird. Dies erfolgt dadurch, daß der Photosensor 4 eingangsseitig mit der Gleichspannungsquelle 1 und ausgangsseitig über einen Meßwiderstand R2 mit Masse verbunden ist. Die an dem Meßwiderstand R2 abfallende Spannung, die von der Leuchtstärke der Leuchtdioden abhängig ist, wird von der Steuerschaltung 2 erfaßt. Hierdurch ist die Möglichkeit gegeben, die sich während des Betriebs ergebenen Veränderungen des Leistungsverhaltens der Leuchtdioden auszugleichen und einen gewünschten Helligkeitswert einzustellen.

Bei den in den Fig. 1 und 2 dargestellten Schaltungsanordnungen werden sämtliche Leuchtdioden gemeinsam angesteuert, so daß alle im wesentlichen die gleiche Helligkeit aufweisen, falls es sich um Leuchtdioden gleicher Farbe und gleicher Art handelt. Es besteht nun die Möglichkeit, Leuchtdioden unterschiedlicher Farben zu verwenden - beispielsweise in den Farben rot, grün und blau - und durch geeignetes Steuern der Helligkeit der unterschiedlichen Farben einen gewünschten mittleren Farbton (auch weißes Licht) zu erzeugen. Um allerdings für die einzelnen Farben eine jeweils getrennte Helligkeitssteuerung zu erzielen, ist für die Leuchtdioden einer Farbe jeweils ein steuerbarer Wechselrichter mit einem daran angeschlossenen Lastkreis mit den Dioden dieser Farbe notwendig. Die drei separaten Wechselrichter können an eine gemeinsame Gleichspannungsquelle oder jeweils an eine eigene Gleichspannungsquelle angeschlossen sein. In diesem Fall ist ferner eine zentrale Schaltung vorgesehen, welche das Ansteuern der verschiedenen Farben koordiniert, indem den einzelnen Steuerschaltungen für die verschiedenen Farben die notwendigen Helligkeitswerte übermittelt werden, die zum Erzielen des gewünschten Farbtons notwendig sind. Die von der zentralen Steuerschaltung an die einzelnen Steuerschaltungen übermittelten Werte werden dann jeweils in den gewünschten Helligkeitswert umgesetzt.

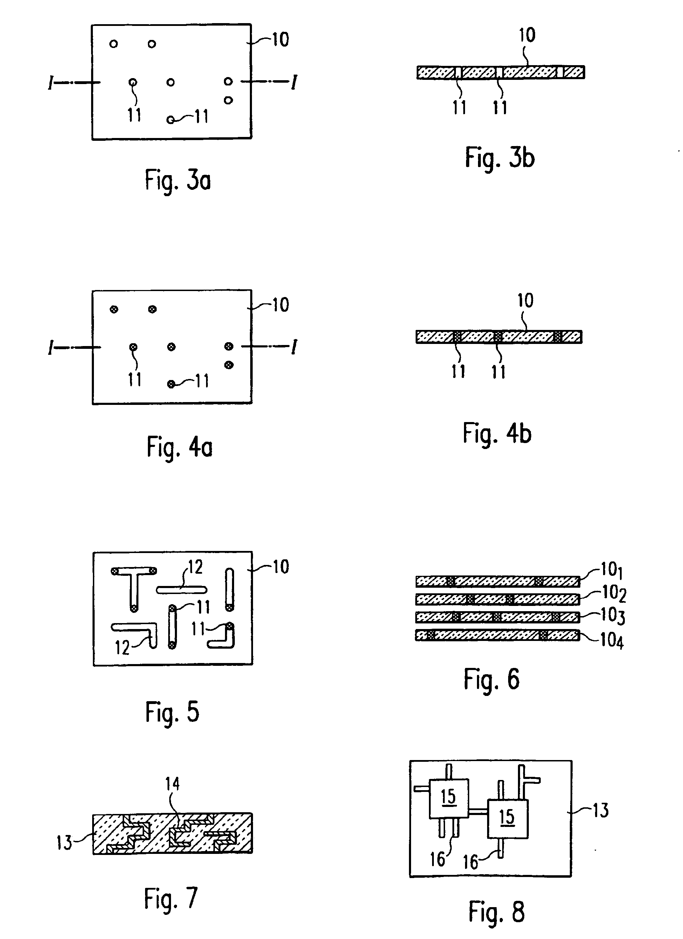

Im folgenden soll nunmehr auf den strukturellen Aufbau der erfindungsgemäßen Schaltungsanordnung eingegangen werden, der sich insbesondere bei der Verwendung von Schaltfrequenzen im Bereich von 200 kHz bis 1 MHz anbietet. Für die Integrierung der passiven Bauelemente bietet sich die bereits erwähnte LTCC-Mehrlagenschaltung an. Die Herstellung einer derartigen Keramik-Mehrlagenstruktur soll nun anhand der Figuren 3a-8 erläutert werden.

Den Grundbaustein einer LTCC-Struktur bildet eine ca. 100-130 µm dicke niedrig sinternde Keramikfolie - beispielsweise aus Aluminiumoxid, das mit Glaspartikeln und weiterem Füller-Material vermischt ist - wie sie in Fig. 3a in Draufsicht gezeigt ist. Der erste Bearbeitungsschritt besteht darin, in die Keramikfolie 10 Durchkontaktierungslöcher 11 zu stanzen. Fig. 3b zeigt die entsprechend bearbeitete Keramikfolie 10 im Schnitt I-I der Fig. 3a. Vor dem Brennprozess beträgt der Durchmesser der Durchkontaktierungslöcher 11 in etwa 250 µm. Im nächsten in den Figuren 4a und 4b dargestellten Arbeitsschritt werden die Durchkontaktierungslöcher 11 dann mit einem leitfähigem Material, üblicherweise mit einer Leiterpaste, die einen relativ hohen Feststoffanteil enthält, gefüllt.

Entsprechend der gewünschten schaltungstechnischen Struktur werden dann auf die Oberseite der Keramikfolie 10 Leiterbahnen 12 aufgedruckt (Fig. 5). Dies erfolgt üblicherweise mittels Siebdruckverfahren. Dabei werden für die Durchkontaktierungen und für die Leiterbahnen Silber-, Silber/Palladium-, Gold- oder Kupferpasten verwendet. Um Durchbiegungen zu vermeiden wird die Materialzusammensetzung der Leiterpasten so gewählt, daß diese beim späteren Sintern in gleichem Maße wie die Keramikschichten 10 selbst schrumpfen.

Die eben beschriebenen Bearbeitungsschritte werden zunächst für jede Keramikfolie 10 getrennt durchgeführt. Die einzelnen Lagen gestanzter und bedruckter Keramikfolien 10 werden dann übereinander angeordnet und ausgerichtet, wie dies in Fig. 6 gezeigt ist. Anschließend werden sie in einer Pressform gestapelt und unter Zuführung von Wärme und Druck laminiert, so daß sich eine zusammenhängende Keramikstruktur bildet. Diese wird schließlich zu einer hochfesten Keramikstruktur gesintert, wobei sich - wie in Fig. 7 gezeigt ist - ein homogenes Keramiksubstrat 13 mit einem darin integrierten zusammenhängenden Leiterbahnen-Netz 14 bildet.

In dem in Fig. 10 gezeigten abschließenden Bearbeitungsschritt werden dann die nicht in die Keramikschaltung integrierbaren Bauteile, beispielsweise diverse Halbleiterbaugruppen 15 an der Oberseite des Keramiksubstrats 13 befestigt und kontaktiert. Dabei können nachträglich auch auf die Oberseite Leiterbahnen 16 aufgebracht werden. Schließlich wird der gesamte Komplex mit Anschlüssen versehen und mit einem metallischen Gehäuse umgeben, das zum einen die Wärmeableitung erhöht und zum anderen die während des Betriebs entstehenden hochfrequenten elektromagnetischen Felder abschirmt.

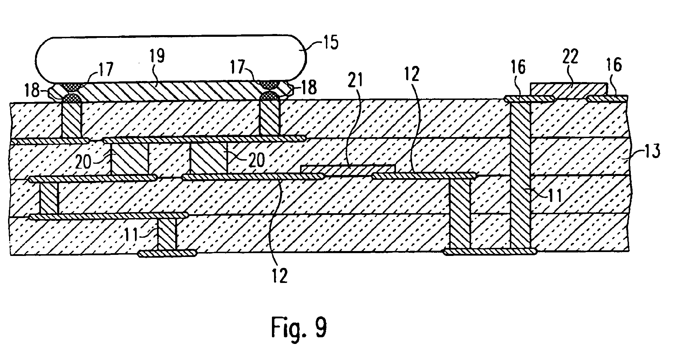

Fig. 9 zeigt nochmals in vergrößerter Darstellung einen Bereich der LTCC-Struktur im Schnitt. Dabei sind noch die Trennlinien zwischen den einzelnen ursprünglichen Keramikschichten eingezeichnet, auch wenn sich - wie zuvor beschrieben - nach dem Laminieren und Sintern eine homogene Keramikstruktur 13 bildet. Wie auf der rechten Seite der Abbildung zu sehen ist, können sich dabei die vertikal verlaufenden Leiterbahnen 11, die durch die im ersten Verfahrensschritt herausgestanzten Durchkontaktierungslöcher gebildet werden, auch über mehrere Ebenen erstrecken. Der wesentliche Vorteil der Verwendung einer LTCC-Struktur besteht darin, daß nicht nur Leiterbahnen 11 bzw. 12 sondern auch andere passive Bauelemente in die Mehrlagenschaltung integriert werden können. Im Rahmen des in Fig. 5 gezeigten Bearbeitungsschrittes können neben der Leiterpaste für die allgemeinen Leiterbahnen 12 beispielsweise auch andere Materialien mit bestimmter Leitfähigkeit auf die Oberseite einer einzelnen Keramikschicht 10 aufgebracht werden, so daß auf diese Weise ein Widerstand 21 vollkommen in die Keramikstruktur 13 integriert werden kann. Neben den üblichen Durchkontaktierungslöchern 11 können aber beispielsweise auch größere vertikal verlaufende Löcher in eine Keramikschicht 10 eingestanzt werden. Diese können dann mit einem Material 20 mit einer bestimmten Dielektrizitätskonstante gefüllt werden, so daß durch die in Fig. 9 gezeigten Schichtanordnung Leiterbahn - Dielektrikum 20 - Leiterbahn in das Keramiksubstrat 13 integrierte Kapazitäten realisiert werden können.

Ferner könnte eine Induktivität innerhalb der Keramikstruktur 13 durch eine auf eine einzelne Keramikschicht 10 aufgedruckte spiralenartige Leiterbahn realisiert werden. Denkbar wäre allerdings auch, die verschiedenen Wicklungen der Induktivität auf mehrere Leiterbahn-Ebenen zu verteilen. Derartige Strukturen werden auch als planare Induktivitäten bezeichnet. Zur Erhöhung der Induktivität, könnte ferner auch eine Öffnung oder Ausnehmung in dem Keramiksubstrat 13 vorgesehen werden, die mit einem geeigneten Kern-Material, beispielsweise Ferrit, gefüllt wird.

Für die in die Mehrlagenschaltung integrierten Bauelemente können nur Induktivitäts- und Kapazitätswerte bis zu einer bestimmten Höhe erreicht werden. Diese Werte sind allerdings für einen ordnungsgemäßen Betrieb der erfindungsgemäßen Schaltungsanordnung bei Frequenzen im Bereich zwischen 200 kHz und 1 MHz ausreichend.

Allerdings können bei der LTCC-Technik nicht sämtliche Bauelemente der Schaltungsanordnung in die Mehrlagenschaltung 13 integriert werden. Beispielsweise wird die Steuerschaltung durch eine Halbleiter-Baugruppe 15 gebildet, die nicht in die Keramikschicht 13 integriert werden kann. Vorzugsweise werden dann solche Halbleiter-Baugruppen 15 an der Oberseite der Mehrlagenschaltung 13 mittels Flip-Chip-Technik kontaktiert. Dabei wird zwischen die Oberseite des Keramiksubstrats 13 und die ungehäuste Halbleiterschaltung 15 ein anisotrop elektrisch leitender Kunststoff eingebracht, der senkrecht zur Flip-Chip-Kontaktierungsebene elektrisch leitfähig und in der Kontaktierungsebene isolierend wirkt. Als elektrisch leitende Partikel enthält der Kunststoff beispielsweise unregelmäßig geformte Metallstückchen oder aber auch kleinere Kügelchen oder Fasern, welche eine Kontaktierung zwischen den Oberflächenkontakten 18 des Keramiksubsvats 13 und den Anschlußpads 17 der Halbleiterbaugruppe 15 bewirken. Ferner nimmt dieser Kunststoff 18 auch Spannungen auf, die sich durch eine unterschiedlich thermische Ausdehnung des Keramikmaterials und der Halbleiterbaugruppe 15 ergeben können. Diese Flip-Chip-Technik ermöglicht eine sehr hohe Kontaktierungsdichte, so daß sie ebenfalls zu einer Volumenreduzierung des gesamten Schaltung beiträgt. Auch die Leuchtdioden selbst können mit dieser Technologie auf die Oberseite der Mehrlagenschaltung 15 aufgebracht werden. Selbstverständlich können auch Widerstände 22 oder Induktivitäten der Schaltung als diskrete Teile an der Oberfläche angeordnet werden.

Das erfindungsgemäße Verfahren zum Betreiben der Leuchtdioden ermöglicht somit eine sehr einfache und effektive Steuerung der Helligkeit. Ferner ist die Möglichkeit gegeben, die aus den elektronischen Vorschaltgeräten für Leuchtstofflampen bekannten Technologien analog auch zum Betreiben der Leuchtdioden einzusetzen, so daß hier variable und komfortable Steuermöglichkeiten zur Verfügung stehen. Ferner besteht die Möglichkeit, die Versorgungsspannung, die Spannungs- und Stromfestigkeit der Leistungsschalter an die Erfordernisse der LED-Arrays anzupassen, wodurch auch bei der Verwendung von drei oder mehreren LED-Farben die Integration der Schaltungsanordnung auf einem einzigen Chip möglich ist, so daß sehr kompakte und leistungsstarke Leuchtmittel gebildet werden können. Schließlich kann auch auf einen Hochvoltprozeß für den Brückentreiber verzichtet werden, wenn eine entsprechende Versorgungsspannung gewählt wird.

## Patentansprüche

1. Beleuchtung aufweisend eine Schaltungsanordnung zur Spannungsversorgung und Steuerung des Betriebsverhaltens wenigstens einer Leuchtdiode (D1, D2), aufweisend
mindestens einen mit einer Gleichspannungsquelle (1) verbundenen und in seiner Ausgangsfrequenz variierbaren Wechselrichter mit mindestens zwei steuerbaren Leistungsschaltern (S1, S2) zum Umsetzen der von der Gleichspannungsquelle (1) abgegebenen Versorgungsgleichspannung (U₀) in eine bipolare Wechselspannung sowie
einen an den Ausgang des Wechselrichters angeschlossenen und ein Resonanzglied aufweisenden Lastkreis, der die wenigstens eine Leuchtdiode (D1, D2) enthält und der mit der bipolaren Wechselspannung angesteuert ist,
wobei die Schaltfrequenz der Leistungsschalter (S1, S2) veränderbar ist und zum Steuern der Helligkeit der wenigstens einen Leuchtdiode (D1, D2) ausgehend von der Resonanzfrequenz des Lastkreises eine Frequenzänderung erfolgt.

2. Beleuchtung nach Anspruch 1,
**dadurch gekennzeichnet,**
**daß** der Lastkreis mindestens zwei Leuchtdioden (D1, D2) aufweist, die antiparallel geschaltet sind.

3. Beleuchtung nach Anspruch 1,
**dadurch gekennzeichnet,**
**daß** der mindestens einen Leuchtdiode (D1) ein Gleichrichter vorgeschaltet ist.

4. Beleuchtung nach einem der vorherigen Ansprüche,
**dadurch gekennzeichnet,**
**daß** diese Mittel (4, R2) zum Erfassen des von der mindestens einen Leuchtdiode (D1) abgegebenen Lichts aufweist.

5. Beleuchtung nach einem der Ansprüche 1 bis 3,
**dadurch gekennzeichnet,**
**daß** diese Mittel (R1) zum Erfassen des durch die mindestens eine Leuchtdiode (D1, D2) fließenden Stroms aufweist.

6. Beleuchtung nach Anspruch 5,
**dadurch gekennzeichnet,**
**daß** die Schaltfrequenz der Leistungsschalter (S1, S2) in Abhängigkeit von dem erfaßten Strom regelbar ist.

7. Beleuchtung nach Anspruch 5,
**dadurch gekennzeichnet,**
**daß** die von der Gleichspannungsquelle (1) abgegebenen Versorgungsgleichspannung (U₀) in Abhängigkeit von dem erfaßten Strom regelbar ist.

8. Beleuchtung nach einem der vorherigen Ansprüche,
**dadurch gekennzeichnet,**
**daß** diese Leuchtdioden verschiedener Farbe aufweist, wobei für die Leuchtdioden jeweils einer Farbe ein Wechselrichter vorgesehen ist.

9. Beleuchtung nach einem der vorherigen Ansprüche,
**dadurch gekennzeichnet,**
**daß** jeweils mehrere Leuchtdioden zu einem Array zusammengefaßt sind.

10. Beleuchtung nach einem der vorherigen Ansprüche,
**dadurch gekennzeichnet,**
**daß** der Wechselrichter durch zwei in einer Halbbrückenschaltung angeordnete steuerbare Leistungsschalter (S1, S2) gebildet wird.

11. Beleuchtung nach einem der Ansprüche 1 bis 9,
**dadurch gekennzeichnet,**
**daß** der Wechselrichter durch in einer Vollbrückenschaltung angeordnete steuerbare Leistungsschalter gebildet wird.

12. Beleuchtung nach Anspruch 10 oder 11,
**dadurch gekennzeichnet,**
**daß** die Leistungsschalter Feldeffekttransistoren (S 1, S2) sind.

13. Beleuchtung nach einem der vorherigen Ansprüche,
**dadurch gekennzeichnet,**
**daß** die Schaltfrequenz der Leistungsschalter (S1, S2) im Bereich zwischen 200 kHz und 1 MHz liegt.

14. Beleuchtung nach einem der vorherigen Ansprüche,
**dadurch gekennzeichnet,**
**daß** diese mindestens eine Mehrlagenschaltung (13) aufweist, in die passive Bauelemente (20, 21) der Beleuchtung integriert sind.

15. Beleuchtung nach Anspruch 14,
**dadurch gekennzeichnet,**
**daß** eine Mehrlagenschaltung aus mehreren übereinander angeordneten Leiterplatten besteht, an deren Ober- und/oder Unterseiten Leiterbahnen aus einem leitfähigen Material aufgebracht sind und die zum Verbinden von verschiedenen Leitungsebenen Durchkontaktierungslöcher aufweisen, die ebenfalls mit einem leitfähigen Material gefüllt sind.

16. Beleuchtung nach Anspruch 14,
**dadurch gekennzeichnet,**
**daß** es sich bei der Mehrlagenschaltung um eine LTCC-Struktur (13) handelt, welche aus mehreren übereinander angeordneten niedrig sinternden Keramikschichten (10) besteht, zwischen denen sich Leiterbahnen (12) befinden, wobei die Keramikschichten (10) Durchkontaktierungslöcher (11) zum Verbinden von Leiterbahnen (12) unterschiedlicher Ebenen aufweisen.

17. Beleuchtung nach einem der Ansprüche 14 bis 16,
**dadurch gekennzeichnet,**
**daß** die Mehrlagenschaltung (13) von einem metallischen Gehäuse umgeben ist.

18. Beleuchtung nach einem der Ansprüche 14 bis 17,
**dadurch gekennzeichnet,**
**daß** Halbleiterbaugruppen (15) auf der Oberfläche der Mehrlagenschaltung (13) mittels Flip-Chip-Technologie befestigt sind.

19. Verfahren zur Spannungsversorgung und Steuerung des Betriebsverhaltens wenigstens einer Leuchtdiode (D1, D2) zu Beleuchtungszwecken, mit
mindestens einem mit einer Gleichspannungsquelle (1) verbundenen und in seiner Ausgangsfrequenz variierbaren Wechselrichter mit mindestens zwei steuerbaren Leistungsschaltern (S1, S2) zum Umsetzen der von der Gleichspannungsquelle (1) abgegebenen Versorgungsgleichspannung (U₀) in eine bipolare Wechselspannung sowie
einem an den Ausgang des Wechselrichters angeschlossenen und ein Resonanzglied (L1, C2) aufweisenden Lastkreis, der die wenigstens eine Leuchtdiode (D1, D2) enthält und der mit der bipolaren Wechselspannung angesteuert wird,
wobei zum Steuern der Helligkeit der wenigstens einen Leuchtdiode (D1, D2) die Schaltfrequenz der Leistungsschalter (S1, S2) ausgehend von der Resonanzfrequenz des Lastkreises verändert wird.

## Claims

1. Illumination means having a circuitry arrangement for voltage supply and control of the operating behaviour of at least one light emitting diode (D1, D2), having
at least one inverter, connected with a d.c. voltage source (1) and variable in its output frequency, having at least two controllable power switches (S1, S2) for conversion of the supply d.c. voltage (U₀) issued by the d.c. voltage source (1) into a bipolar a.c. voltage, and
a load circuit connected to the output of the inverter and having a resonance member, which load circuit contains the at least one light emitting diode (D1, D2) and which load circuit is controlled with the bipolar voltage,
wherein the switching frequency of the power switches (S1, S2) is alterable and for controlling the brightness of the at least one light emitting diode (D1, D2) a frequency alteration, starting from the resonance frequency of the load circuit, is effected.

2. Illumination means according to claim 1,
**characterized in that**,
the load circuit has at least two light emitting diodes (D1, D2), which are connected anti-parallel.

3. Illumination means according to claim 1,
**characterized in that**,
a rectifier is connected upstream of the at least one light emitting diode (D1).

4. Illumination means according to any preceding claim,
**characterized in that**,
this has means (4, R2) for detecting the light issued from the at least one light emitting diode (D1).

5. Illumination means according to any of claims 1 to 3,
**characterized in that**,
this has means (R1) for detecting the current flowing through the at least one light emitting diode (D1, D2).

6. Illumination means according to claim 5,
**characterized in that**,
the switching frequency of the power switches (S1, S2) can be regulated in dependence upon the detected current.

7. Illumination means according to claim 5,
**characterized in that**,
the supply d.c. voltage (U₀) issued from the d.c. voltage source (1) can be regulated in dependence upon the detected current.

8. Illumination means according to any preceding claim,
**characterized in that**,
this has light emitting diodes of different colours, wherein for the light emitting diodes of one colour in each case an inverter is provided.

9. Illumination means according to any preceding claim,
**characterized in that**,
in each case a plurality of light emitting diodes are assembled to an array.

10. Illumination means according to any preceding claim,
**characterized in that**,
the inverter is formed by means of two controllable power switches (S1, S2) arranged in a half-bridge circuit.

11. Illumination means according to any of claims 1 to 9,
**characterized in that**,
the inverter is formed by means of controllable power switches arranged in a full-bridge circuit.

12. Illumination means according to claim 10 or 11,
**characterized in that**,
the power switches are field effect transistors (S1, S2).

13. Illumination means according to any preceding claim,
**characterized in that**,
the switching frequency of the power switches (S1, S2) lies in the range between 200 kHz and 1 MHz.

14. Illumination means according to any preceding claim,
**characterized in that**,
this has at least one multi-layer circuit 13, in which the passive components (20, 21) of the illumination means are integrated.

15. Illumination means according to claim 14,
**characterized in that**,
a multi-layer circuit is of a plurality of circuit boards arranged above one another, at the upper and/or lower sides of which conductor paths of a conductive material are applied and which for the connection of the different conductor levels has through-contact holes which are likewise filled with a conductive material.

16. Illumination means according to claim 14,
**characterized in that**,
the multi-layer circuit is a LTCC structure (13), which is of a plurality of low-temperature sintered ceramic layers (10) arranged above one another between which conductor paths (12) are located, wherein the ceramic layers (10) have through-contact holes (11) for connection of conductor paths (12) of different levels.

17. Illumination means according to any of claims 14 to 16,
**characterized in that**,
the multi-layer circuit (12) is surrounded by a metallic housing.

18. Illumination means according to any of claims 14 to 17,
**characterized in that**,
semiconductor component groups (15) are attached to the surface of the multi-layer circuit (13) by means of flip-chip technology.

19. Method for voltage supply and control of the operating behaviour of at least one light emitting diode (D1, D2) for the purposes of illumination, having
at least one inverter, connected with a d.c. voltage source (1) and variable in its output frequency, having at least two controllable power switches (S1, S2) for conversion of the supply d.c. voltage (U₀) issued from the d.c. voltage source (1) into a bipolar a.c. voltage and
a load circuit connected to the output of the inverter and having a resonance member (L1, C2), which load circuit contains the at least one light emitting diode (D1, D2) and is controlled with the bipolar a.c. voltage,
wherein for controlling the brightness of the at least one light emitting diode (D1, D2) the switching frequency of the power switches (S1, S2) is altered, starting from the resonance frequency of the load circuit.

## Revendications

1. Éclairage présentant un montage de circuit pour l'alimentation en tension et la commande du comportement de fonctionnement d'au moins une diode électroluminescente (D1, D2), présentant
au moins un onduleur relié à une source de tension continue (1) et de fréquence de sortie variable, avec au moins deux commutateurs de puissance pilotables (S 1, S2) pour convertir la tension continue d'alimentation (U₀) délivrée par la source de tension continue (1) en une tension alternative bipolaire, ainsi que
un circuit de charge raccordé à la sortie de l'onduleur et présentant un élément résonant, qui contient la diode électroluminescente (D1, D2) au nombre d'au moins une et qui est commandé avec la tension alternative bipolaire,
la fréquence de commutation des commutateurs de puissance (S1, S2) étant modifiable et une modification de fréquence étant effectuée pour piloter la luminosité de la diode électroluminescente (D1, D2) au nombre d'au moins une à partir de la fréquence de résonance du circuit de charge.

2. Éclairage selon la revendication 1, **caractérisé en ce que** le circuit de charge présente au moins deux diodes électrolumir-escentes (D1, D2) qui sont montées de manière antiparallèle.

3. Éclairage selon la revendication 1, **caractérisé en ce que** la diode électroluminescente (D1) au nombre d'au moins une est précédée d'un redresseur.

4. Éclairage selon l'une des revendications précédentes, **caractérisé en ce qu'**il présente des moyens (4, R2) pour détecter la lumière délivrée par la diode électroluminescente (D1) au nombre d'au moins une.

5. Éclairage selon l'une des revendications 1 à 3, **caractérisé en ce qu'**il présente des moyens (R1) pour détecter le courant traversant la diode électroluminescente (D1 , D2) au nombre d'au moins une.

6. Éclairage selon la revendication 5, **caractérisé en ce que** la fréquence de commutation des commutateurs de puissance (S1, S2) est régulable en fonction du courant détecté.

7. Éclairage selon la revendication 5, **caractérisé en ce que** la tension continue d'alimentation (Uₒ) délivrée par la source de tension continue (1) est régulable en fonction du courant détecté.

8. Éclairage selon l'une des revendications précédentes, **caractérisé en ce qu'**il présente des diodes électroluminescentes de différentes couleurs, un onduleur étant prévu à chaque fois pour les diodes électroluminescentes de chaque couleur.

9. Éclairage selon l'une des revendications précédentes, **caractérisé en ce que** plusieurs diodes électroluminescentes sont regroupées à chaque fois en un réseau.

10. Éclairage selon l'une des revendications précédentes, **caractérisé en ce que** l'onduleur est formé par deux commutateurs de puissance (S1, S2) pilotables placés dans un circuit en demi-pont.

11. Éclairage selon l'une des revendications 1 à 9, **caractérisé en ce que** l'onduleur est formé par des commutateurs de puissance pilotables placés dans un circuit en pont complet.

12. Éclairage selon la revendication 10 ou 11, **caractérisé en ce que** les commutateurs de puissance sont des transistors à effet de champ (S1, S2).

13. Éclairage selon l'une des revendications précédentes, **caractérisé en ce que** la fréquence de commutation des commutateurs de puissance (S1, S2.) est comprise entre 200 kHz et 1 MHz.

14. Éclairage selon l'une des revendications précédentes, **caractérisé en ce qu'**il présente au moins un circuit mutticouches (13) dans lequel sont intégrés des composants passifs (20, 21) de l'éclairage.

15. Éclairage selon la revendication 14, **caractérisé en ce qu'**un circuit multicouches est constitué de plusieurs circuits imprimés superposés, sur les faces supérieures et/ou inférieures desquels se trouvent des pistes conductrices en matériau conducteur et qui présentent des orifices de contact pour relier les différents plans de conduction, orifices qui sont également remplis d'un matériau conducteur.

16. Éclairage selon la revendication 14, **caractérisé en ce que** le circuit multicouches est une structure LTCC (13) qui es composée de plusieurs couches superposées (10) de céramique à basse température de frittage, entre lesquelles se trouvent des pistes conductrices (12), les couches de céramique (10) présentant des orifices de contact (11) pour relier les pistes conductrices (12) de différents plans.

17. Éclairage selon l'une des revendications 14 à 16, **caractérisé en ce que** le circuit multicouches (13) est entoure d'un boitier métallique.

18. Éclairage selon l'une des revendications 14 à 17, **caractérisé en ce que** les composants semi-conducteurs (15) sont fixés sur la surface du circuit multicouches (13) au moyen d'une technologie Flip-Chip.

19. Procédé d'alimentation en tension et de commande du comportement de fonctionnement d'au moins une diode électroluminescente (D1, D2) à des fins d'éclairage, avec
au moins un onduleur relié à une source de tension continue (1) et de fréquence de sortie variable, avec au moins deux commutateurs de puissance pilotables (S1, S2) pour convertir la tension continue d'alimentation (Uₒ) délivrée par la source de tension continue (1) en une tension alternative bipolaire, ainsi que
un circuit de charge raccordé à la sortie de l'onduleur et présentant un élément résonant (L1, C2), qui contient la diode électroluminescente (D1, D2) au nombre d'au moins une et qui est commandé avec la tension alternative bipolaire,
la fréquence de commutation des commutateurs de puissance (S1, S2) étant modifiée pour piloter la luminosité de la diode électroluminescente (D1, D2) au nombre d'au moins une à partir de la fréquence de résonance du circuit de charge.
